# EUROPEAN PATENT APPLICATION

(11) **EP 4 694 281 A1**
(43) Date of publication of application: **11.02.2026**
(21) Application number: 23931315.8
(22) Date of filing: 04.04.2023
(51) Int. Cl.: H04W 24/02

(54) **COMMUNICATION METHOD AND APPARATUS, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Hersina, Günter
(86) International application number: PCT/CN2023/086333
(87) International publication number: WO 2024/207243

(57) **Abstract**

The present disclosure relates to a communication method and apparatus, and a storage medium. The method comprises receiving information sent by a network device, wherein the information is used by a terminal to manage an artificial intelligence (AI) model. On the basis of the determination of the specific content of the information used by the terminal to manage the Al model and the determination of a bearing mode, the determination of a data transmission mode during a model management process of an AI function is realized.

## Description

### TECHNICAL FIELD

The present disclosure relates to the field of communication technologies, and specifically to a communication method, a communication apparatus, and a storage medium.

### BACKGROUND

In the recent years, artificial intelligence (AI) technology has made continuous breakthroughs in a plurality of fields. The AI technology is gradually intersecting and penetrating other disciplinary fields, which provides a new direction and a new method for the development of different disciplines.

In a 3rd generation partnership project (3GPP), a research project on the AI technology in a radio interface has been established. The project aims to research the introduction of the AI technology into the radio interface, and explores how the AI technology may assist and improve a transmission technology of the radio interface, for example, performing a beam prediction based on an AI model aims to reduce a number of beam pairs measured by the terminal.

### SUMMARY

To overcome problems in the related art, the present disclosure provides a communication method, a communication apparatus, and a storage medium.

According to embodiments of a first aspect of the present disclosure, a communication method is provided, performed by a terminal, including receiving information sent by a network device, in which the information is used by the terminal to manage an artificial intelligence (AI) model.

In an implementation, managing the AI model includes: performing an operation on at least one AI function indicated in the information or on at least one model of the same AI function.

In an implementation, the information includes parameter information, and different functions and/or different models correspond to different pieces of parameter information.

In an implementation, at least one piece of following information included in the different pieces of parameter information is different: network device coverage parameter information; terminal distribution information; beam information; or cell identifier information.

In an implementation, the network device coverage parameter information includes a deployment type, and the deployment type includes at least one of: an urban macro cell, an urban micro cell, an indoor hotspot, a dense urban, or a rural area.

In an implementation, the network device coverage parameter information includes an inter-site distance (ISD) between network devices.

In an implementation, the terminal distribution information includes at least one piece of following information: a number of outdoor terminals; a number of indoor terminals; or a ratio of the number of the outdoor terminals to the number of the indoor terminals.

**In** an implementation, the beam information includes beam information between a first set and a second set; and the first set and the second set include a network device transmission beam and/or a terminal reception beam.

**In** an implementation, the beam information between the first set and the second set includes at least one of: a number of beams corresponding to the first set; a number of beams corresponding to the second set; or a ratio of the number of beams corresponding to the first set to the number of beams corresponding to the second set.

**In** an implementation, the first set is a subset of the second set; and the beam information between the first set and the second set includes location information, in which the location information indicates a location of a beam included in the first set within a beam included in the second set.

**In** an implementation, the first set is different from the second set; and the beam information between the first set and the second set includes a beam mapping relationship, in which the beam mapping relationship is a mapping relationship between a beam included in the first set and a beam included in the second set.

**In** an implementation, the first set is a beam set corresponding to an input value of the AI model, and the second set is a beam set corresponding to a model output.

**In** an implementation, the beam information includes a beam type, and the beam type includes a discrete Fourier transform (DFT) beam or a non-DFT beam.

**In** an implementation, the cell identifier information includes at least one of a serving cell identifier or a neighboring cell identifier.

**In** an implementation, the information is carried in at least one of: system information, a radio resource control (RRC) signaling, or an RRC release message.

**In** an implementation, the RRC signaling includes RRC reconfiguration information, the RRC reconfiguration information includes the information of a target cell, and the target cell is a cell to which the terminal is to hand over and access.

**In** an implementation, the information of the target cell is sent by a network device to which the target cell belongs, to a network device to which a serving cell belongs.

**In** an implementation, the RRC release message is used for a parameter configuration when the terminal switches from an RRC connected state to an RRC inactive state or an RRC idle state; and the AI model is managed by the terminal in the RRC inactive state or the RRC idle state based on the information.

**In** an implementation, the AI model is configured to predict a beam.

According to embodiments of a second aspect of the present disclosure, a communication method is provided, performed by a network device. The method includes: sending information to a terminal, in which the information is used by the terminal to manage an AI model.

**In** an implementation, managing the AI model includes: performing an operation on at least one AI function indicated in the information or on at least one model of the same AI function.

In an implementation, the information includes parameter information, and different functions and/or different models correspond to different pieces of parameter information.

In an implementation, at least one piece of following information included in the different pieces of parameter information is different: network device coverage parameter information; terminal distribution information; beam information; or cell identifier information.

In an implementation, the network device coverage parameter information includes a deployment type, and the deployment type includes at least one of: an urban macro cell, an urban micro cell, an indoor hotspot, a dense urban, or a rural area.

In an implementation, the network device coverage parameter information includes an ISD between network devices.

In an implementation, the terminal distribution information includes at least one piece of following information: a number of outdoor terminals; a number of indoor terminals; or a ratio of the number of the outdoor terminals to the number of the indoor terminals.

In an implementation, the beam information includes beam information between a first set and a second set; and the first set and the second set include a network device transmission beam and/or a terminal reception beam.

In an implementation, the beam information between the first set and the second set includes at least one of: a number of beams corresponding to the first set; a number of beams corresponding to the second set; or a ratio of the number of beams corresponding to the first set to the number of beams corresponding to the second set.

In an implementation, the first set is a subset of the second set; and the beam information between the first set and the second set includes location information, in which the location information indicates a location of a beam included in the first set within a beam included in the second set.

In an implementation, the first set is different from the second set; and the beam information between the first set and the second set includes a beam mapping relationship, in which the beam mapping relationship is a mapping relationship between a beam included in the first set and a beam included in the second set.

In an implementation, the first set is a beam set corresponding to an input value of the AI model, and the second set is a beam set corresponding to a model output.

In an implementation, the beam information includes a beam type, and the beam type includes a DFT beam or a non-DFT beam.

In an implementation, the cell identifier information includes at least one of a serving cell identifier or a neighboring cell identifier.

In an implementation, the information is carried in at least one of: system information, an RRC signaling, or an RRC release message.

In an implementation, the RRC signaling includes RRC reconfiguration information, the RRC reconfiguration information includes the information of a target cell, and the target cell is a cell to which the terminal is to hand over and access.

In an implementation, the information of the target cell is sent by a network device to which the target cell belongs, to a network device to which a serving cell belongs.

In an implementation, the RRC release message is used for a parameter configuration when the terminal switches from an RRC connected state to an RRC inactive state or an RRC idle state; and the AI model is managed by the terminal in the RRC inactive state or the RRC idle state based on the information.

In an implementation, the AI model is configured to predict a beam.

According to embodiments of a third aspect of the present disclosure, a communication apparatus is provided, including: a receiving unit, configured to receive information sent by a network device, in which the information is used by the terminal to manage an AI model.

In an implementation, managing the AI model includes: performing an operation on at least one AI function indicated in the information or on at least one model of the same AI function.

In an implementation, different functions and/or different models correspond to different pieces of parameter information.

In an implementation, at least one piece of following information included in the different pieces of parameter information is different: network device coverage parameter information; terminal distribution information; beam information; or cell identifier information.

In an implementation, the network device coverage parameter information includes a deployment type, and the deployment type includes at least one of: an urban macro cell, an urban micro cell, an indoor hotspot, a dense urban, or a rural area.

In an implementation, the network device coverage parameter information includes an ISD between network devices.

In an implementation, the terminal distribution information includes at least one piece of following information: a number of outdoor terminals; a number of indoor terminals; or a ratio of the number of the outdoor terminals to the number of the indoor terminals.

In an implementation, the beam information includes beam information between a first set and a second set; and the first set and the second set include a network device transmission beam and/or a terminal reception beam.

In an implementation, the beam information between the first set and the second set includes at least one of: a number of beams corresponding to the first set; a number of beams corresponding to the second set; or a ratio of the number of beams corresponding to the first set to the number of beams corresponding to the second set.

In an implementation, the first set is a subset of the second set; and the beam information between the first set and the second set includes location information, in which the location information indicates a location of a beam included in the first set within a beam included in the second set.

In an implementation, the first set is different from the second set; and the beam information between the first set and the second set includes a beam mapping relationship, in which the beam mapping relationship is a mapping relationship between a beam included in the first set and a beam included in the second set.

In an implementation, the first set is a beam set corresponding to an input value of the AI model, and the second set is a beam set corresponding to a model output.

In an implementation, the beam information includes a beam type, and the beam type includes a DFT beam or a non-DFT beam.

In an implementation, the cell identifier information includes at least one of a serving cell identifier or a neighboring cell identifier.

In an implementation, the information is carried in at least one of: system information, an RRC signaling, or an RRC release message.

In an implementation, the RRC signaling includes RRC reconfiguration information, the RRC reconfiguration information includes the information of a target cell, and the target cell is a cell to which the terminal is to hand over and access.

In an implementation, the information of the target cell is sent by a network device to which the target cell belongs, to a network device to which a serving cell belongs.

In an implementation, the RRC release message is used for a parameter configuration when the terminal switches from an RRC connected state to an RRC inactive state or an RRC idle state; and the AI model is managed by the terminal in the RRC inactive state or the RRC idle state based on the information.

In an implementation, the AI model is configured to predict a beam.

According to embodiments of a fourth aspect of the present disclosure, a communication apparatus is provided, including: a sending unit, configured to send information to a terminal, in which the information is used by the terminal to manage an AI model.

In an implementation, managing the AI model includes: performing an operation on at least one AI function indicated in the information or on at least one model of the same AI function.

In an implementation, different functions and/or different models correspond to different pieces of parameter information.

In an implementation, at least one piece of following information included in the different pieces of parameter information is different: network device coverage parameter information; terminal distribution information; beam information; or cell identifier information.

In an implementation, the network device coverage parameter information includes a deployment type, and the deployment type includes at least one of: an urban macro cell, an urban micro cell, an indoor hotspot, a dense urban, or a rural area.

In an implementation, the network device coverage parameter information includes an ISD between network devices.

In an implementation, the terminal distribution information includes at least one piece of following information: a number of outdoor terminals; a number of indoor terminals; or a ratio of the number of the outdoor terminals to the number of the indoor terminals.

In an implementation, the beam information includes beam information between a first set and a second set; and the first set and the second set include a network device Tx beam and/or a terminal Rx beam.

In an implementation, the beam information between the first set and the second set includes at least one of: a number of beams corresponding to the first set; a number of beams corresponding to the second set; or a ratio of the number of beams corresponding to the first set to the number of beams corresponding to the second set.

In an implementation, the first set is a subset of the second set; and the beam information between the first set and the second set includes location information, in which the location information indicates a location of a beam included in the first set within a beam included in the second set.

In an implementation, the first set is different from the second set; and the beam information between the first set and the second set includes a beam mapping relationship, in which the beam mapping relationship is a mapping relationship between a beam included in the first set and a beam included in the second set.

In an implementation, the first set is a beam set corresponding to an input value of the AI model, and the second set is a beam set corresponding to a model output.

In an implementation, the beam information includes a beam type, and the beam type includes a DFT beam or a non-DFT beam.

In an implementation, the cell identifier information includes at least one of a serving cell identifier or a neighboring cell identifier.

In an implementation, the information is carried in at least one of: system information, an RRC signaling, or an RRC release message.

In an implementation, the RRC signaling includes RRC reconfiguration information, the RRC reconfiguration information includes the information of a target cell, and the target cell is a cell to which the terminal is to hand over and access.

In an implementation, the information of the target cell is sent by a network device to which the target cell belongs, to a network device to which a serving cell belongs.

In an implementation, the RRC release message is used for a parameter configuration when the terminal switches from an RRC connected state to an RRC inactive state or an RRC idle state; and the AI model is managed by the terminal in the RRC inactive state or the RRC idle state based on the information.

In an implementation, the AI model is configured to predict a beam.

According to a fifth aspect of the present disclosure, a communication device is provided, including: a processor; and a memory for storing instructions executable by the processor, in which the processor is configured to implement the communication method of the first aspect, or any one of the implementations of the first aspect.

According to a sixth aspect of the present disclosure, a communication device is provided, including: a processor; and a memory for storing instructions executable by the processor, in which the processor is configured to implement the communication method of the second aspect, or any one of the implementations of the second aspect.

According to a seventh aspect of the present disclosure, a storage medium for storing instructions is provided. When the instructions in the storage medium are executed by a processor of a terminal, the terminal is caused to implement the communication method of the first aspect or any one of the implementations of the first aspect.

According to an eighth aspect of the present disclosure, a storage medium for storing instructions is provided. When the instructions in the storage medium are executed by a processor of a terminal, the terminal is caused to implement the communication method of the second aspect or any one of the implementations of the second aspect.

The technical solution provided by the embodiments of the present disclosure may include following beneficial effects: based on determination of specific content of information used by the terminal to manage the AI model and determination of a carrying method, determination of a data transmission method during a model management process of the AI function is achieved.

It should be understood that an above general description and a following detailed description are exemplary and explanatory only, and do not limit the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
FIG. 1 is a schematic diagram illustrating a wireless communication system according to an exemplary embodiment.
FIG. 2 is a flowchart illustrating a communication method according to an exemplary embodiment.
FIG. 3 is a flowchart illustrating a communication method according to an exemplary embodiment.
FIG. 4 is a block diagram illustrating a communication apparatus according to an exemplary embodiment.
FIG. 5 is a block diagram illustrating a communication apparatus according to an exemplary embodiment.
FIG. 6 is a schematic diagram illustrating an architecture of a communication system according to an exemplary embodiment.
FIG. 7 is a block diagram illustrating a device for communication according to an exemplary embodiment.
FIG. 8 is a block diagram illustrating a device for communication according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the embodiments of the present disclosure.

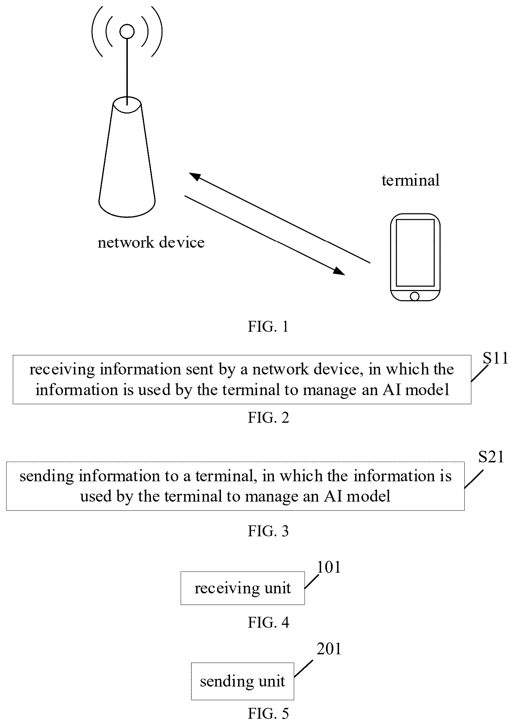

A communication method according to embodiments of the present disclosure may be applied to a wireless communication system shown in FIG. 1. As shown in FIG. 1, the wireless communication system includes a network device and a terminal. The terminal connects to the network device and performs a data transmission via a wireless resource.

It may be understood that the wireless communication system shown in FIG. 1 is only schematic. The wireless communication system may also include other network devices, such as a core network device, a wireless relay device, and a wireless backhaul device, which are not shown in FIG. 1. The embodiments of the present disclosure do not limit a number of network devices or terminals included in the wireless communication system.

Furthermore, it may be understood that the wireless communication system according to embodiments of the present disclosure is a network that provides a wireless communication function. The wireless communication system may employ different communication technologies, such as code division multiple access (CDMA), wideband code division multiple access (WCDMA), time division multiple access (TDMA), frequency division multiple access (FDMA), orthogonal frequency-division multiple access (OFDMA), single carrier FDMA (SC-FDMA), or carrier sense multiple access/collision avoidance. Depending on a factor such as capacities, velocities, latencies and so on of different networks, the networks may be categorized into a 2G (generation) network, a 3G network, a 4G network, or a future evolved network, such as a 5G network. The 5G network may also be referred to as a new radio (NR) network. For convenience, the wireless communication network may sometimes be simply referred to as the network in the present disclosure.

Further, the network device mentioned in the present disclosure may also be called a radio access network device. This radio access network device may include: a base station, an evolved Node B (eNB), a home base station, an access point (AP) in a wireless fidelity (Wi-Fi) system, a wireless relay node, a wireless backhaul node, a transmission point (TP), or a transmission and reception point (TRP). It may also be a next generation node B (gNB) in an NR system or a component or a part of a base station. It may be understood that the embodiments of the present disclosure do not limit a detailed technology or a detailed device form adopted by the network device. In the present disclosure, the network device may provide communication coverage for a specific geographic area and communicate with a terminal located in a coverage area (cell). Moreover, the network device may also be a vehicle-mounted device in a vehicle-to-everything (V2X) communication system.

Furthermore, the terminal mentioned in the present disclosure may also be called a terminal device, a user equipment (UE), a mobile station (MS), a mobile terminal (MT) or the like. The terminal is a device that provides speech and/or data connectivity to a user. For example, the terminal may be a handheld device or a vehicle-mounted device with a wireless connection function. At present, an example of the terminal includes a mobile phone, a customer premise equipment (CPE), a pocket personal computer (PPC), a palmtop computer, a personal digital assistant (PDA), a laptop, a tablet, a wearable device, a vehicle-mounted device or the like. In addition, in the V2X communication system, the terminal may also be the vehicle-mounted device. It should be understood that the embodiments of the present disclosure do not limit a detailed technology and a detailed device form adopted by the terminal.

In the NR system, especially when a communication frequency band is in frequency range 2, due to rapid attenuation of a high-frequency channel, a beam-based transmission and reception are required to ensure coverage.

In a conventional beam management process, the network device may configure a reference signal resource set for beam measurement, and the terminal measures reference signal resources in the reference signal resource set, and then reports IDs of X stronger reference signal resources and their corresponding layer 1 - Reference Signal Received Powers (L1-RSRPs) and/or layer 1 - Signal to Interference plus Noise Ratios (L1-SINRs). The problem of a conventional method is that a reference signal resource set configured by a base station includes X reference signals, and each reference signal corresponds to a different transmission (Tx) beam of the base station. For each reference signal, the terminal needs to perform measurement by using a plurality of reception (Rx) beams, obtain a beam measurement quality corresponding to each of the plurality of Rx beams, and determine a best beam measurement quality from the beam measurement qualities. Therefore, a maximum number of beam pairs that the terminal needs to measure is M*N, in which M is a number of Tx beams of the base station and N is a number of Rx beams of the terminal. In this way, the terminal needs to measure a large number of beam pairs. There is a need to reduce the number of beam pairs measured by the terminal.

In recent years, the artificial intelligence (AI) technology has made continuous breakthroughs in a plurality of fields. While bringing convenience to people's lives, the AI technology also promotes industrial upgrading in various fields. As the AI technology intersects and penetrates other disciplinary fields, the AI technology not only integrates knowledge from different disciplines in its development, but also provides a new direction and a new method for the development of various disciplines.

Taking the communication industry as an example, in the stage of a Release 18 of the 3rd generation partnership project (3GPP) standard organization, a research project on the AI technology in the radio interface is designed within a potential new work item discussed and determined by a RAN1 working group. This project aims to study how to introduce the AI technology into the radio interface, while also explore how the AI technology may assist and improve a transmission technology of the radio interface.

To reduce the number of beam pairs measured by the terminal, an AI-based prediction method is proposed. For example, a total number of beam pairs that the terminal originally needed to measure is M*N (in which M is a number of Tx beams of the base station and N is a number of Rx beams of the terminal). However, with the AI model, for a spatial domain beam prediction, the terminal only needs to measure a part of M*N beam pairs, such as 1/8, 1/4, etc., and then inputs beam measurement qualities of these measured beam pairs into the AI model. Accordingly, the model may output beam information for all the M*N beam pairs. For a time domain beam prediction, the terminal may measure a beam quality of a beam pair at a historical moment, so as to predict beam information of the beam pair at a future moment.

At present, an AI-based prediction of a beam measurement result has been proposed, including the spatial domain beam prediction and the time domain beam prediction. For spatial domain beam prediction, a measurement result of a beam in set A is predicted based on a measurement result of a beam in set B. For time domain beam prediction, a beam in the set A at a future moment is predicted based on a measurement result of the set B at a historical moment. The set B is a subset of the set A, or the set B is a wide beam while the set A is a narrow beam, or for time domain beam prediction, there is also a case where the set B is the same as the set A.

The beam prediction principle by using the AI model is described as follows.
1. For a spatial domain prediction, the terminal measures an L1-RSRP of the set B, and inputs the L1-RSRP into the AI model, so that an L1-RSRP of the set A or a best beam in the set A is predicted. A relationship between the set B and the set A includes following two types (1)-(2).
   (1) The set B is a subset of the set A. For example, if the set A includes 32 reference signals (each reference signal corresponds to a beam direction), the set B includes N reference signals from the set A, for example, N=8.
   (2) The set B is a wide beam, and the set A is a narrow beam. For example, the set A includes 32 reference signals (each reference signal corresponds to a beam direction, and the 32 reference signals cover a 120-degree direction). The set B includes another N reference signals, for example, N=8, and these N reference signals also cover a 120-degree direction. That is, a beam direction of each reference signal in the set B covers beam directions of a plurality of the reference signals in the set A. It may be understood that 32/N reference signals in the set A have a quasi co location (QCL) Type D relationship with the same reference signal in the set B.
2. For a time domain prediction, the terminal measures an L1-RSRP of the set B at a historical moment, and inputs the L1-RSRP into the AI model, so that an L1-RSRP of the set A at a future moment is predicted. In addition to the two types mentioned above, the relationship between the set B and the set A may also be that the set B is the same as the set A.

If it is based on the AI model, no reference signal may be sent at a future moment. Beam information is obtained based on an output of the AI model and reported to the base station. In conventional methods, the reference signal also needs to be sent at the future moment. The terminal measures the reference signal at the future moment to obtain the beam information and reports the beam information to the base station.

In the related art, management of the AI model is implemented based on two management methods, including: based on an AI function and a model identifier. The principle of managing a model based on the AI function may be understood as: the terminal only needs to inform the network device of which AI function the terminal supports. Then, operations such as activation, deactivation, and switching of the AI function require an interaction between the terminal and the network device, and need the network device to decide, or need the terminal to decide and inform the network device. However, under a certain AI function, the terminal may maintain one or more AI models. If there are a plurality of AI models, the terminal may switch between different models under one AI function on its own, without a need for the network device to decide or without a need to inform the network device after the terminal decides. Management based on the model identifier may be understood as: the terminal needs to inform the network device of which model corresponding to the model identifier the terminal supports. Then, operations such as activation, deactivation, and switching of the AI model require an interaction between the terminal and the network device, and need the network device to decide, or need the terminal to decide and inform the network device.

It may be understood that when model management based on the AI function is used, as mentioned above, the terminal may be pre-deployed with more than one model having the same AI function. Therefore, when the terminal uses the model management based on the AI function, if switching between different AI functions is to be implemented, it is necessary to interact with the network device to trigger a performance indicator of the switching and a switching decision, etc. However, if switching or selecting between different models of the same AI function is to be implemented, the terminal only needs to determine to select which model among a plurality of models under the AI function based on current information. The current information requires the network device to send auxiliary information that supports the terminal in switching or selecting between different models of the same AI function. However, it is necessary to firstly determine which specific information is included in auxiliary information and how the specific information is sent.

In view of this, embodiments of the present disclosure provide a method for determining auxiliary information to be used and a method for sending the auxiliary information, for the model management based on the same AI function.

FIG. 2 is a flowchart of a communication method according to an exemplary embodiment. As shown in FIG. 2, the communication method, performed by a terminal, includes the following step at S11.

At S11, information sent by a network device is received, in which the information is used by the terminal to manage an AI model.

In embodiments of the present disclosure, the AI model managed by the terminal is used for beam prediction.

In embodiments of the present disclosure, for an AI model deployed on the terminal, management is performed based on the information sent by the network device. There may be a plurality of implementations for a type of information and specific information content, for example, the type of information may be system information, etc., and the specific information content may be corresponding parameter information, etc.

In embodiments of the present disclosure, the information sent by the network device for the terminal to manage the AI model may serve as auxiliary information. For convenience of description below, the auxiliary information sent by the network device that supports the terminal in switching between different models under the same function or the used auxiliary information is expressed as information sent by the network device for the terminal to manage the AI model, also referred to as information for short.

For example, for the AI model deployed on the terminal, a model corresponding to the same AI function is managed, for example, switching from a first model with a spatial domain beam prediction function to a second model with the spatial domain beam prediction function, etc.

In the communication method provided in an embodiment, the terminal may determine management content for the AI model deployed on the terminal via the information sent by the network device.

Managing the AI model includes: performing an operation on at least one AI function indicated in the information or on at least one model of the same AI function; and performing the operation on the at least one AI function indicated in the information includes at least one of: activating an AI function, deactivating an AI function, or switching between different AI functions; performing the operation on the at least one model of the same AI function includes at least one of: activating a model, deactivating a model, or switching between different models.

For example, performing the operation on the at least one AI function indicated in the information may include: managing and/or operating the at least one AI function, which includes at least one of: activating an AI function, deactivating an AI function, or switching between different AI functions. Performing the operation on the at least one model of the same AI function indicated in the information may include: managing and/or operating the at least one model included in the same AI function, which includes at least one of: activating a model, deactivating a model, or switching between different models. In embodiments of the present disclosure, for the AI model deployed on the terminal, the network device may perform management using a function corresponding to the model, while the terminal may perform the management using the model identifier corresponding to the model. Therefore, the management of the model is carried out from two aspects: a function level and a model level. The management at the function level may include at least one of: activating the at least one AI function, deactivating the at least one AI function, or switching between different AI functions. For example, if the spatial domain beam prediction is needed, an AI function corresponding to the spatial domain beam prediction is enabled, i.e., an AI function for the spatial domain beam prediction is activated. The network device may not indicate which specific model corresponding to the AI function for the spatial domain beam prediction is activated.

For example, during a beam prediction process, if the requirement changes to perform the time domain beam prediction, the activated AI function corresponding to the spatial domain beam prediction should be deactivated, and an AI function corresponding to the time domain beam prediction should be then activated, thus achieving the switching between different AI functions. For example, the network device may send corresponding indication information to the terminal, causing the terminal to deactivate the activated AI function corresponding to the spatial domain beam prediction and then activate the AI function corresponding to the time domain beam prediction, thus achieving the switching between different AI functions.

For example, management at the model level may include at least one of: managing activating at least one model included in the same AI function, deactivating the at least one model, or switching between different models of the same function. For example, if the spatial domain beam prediction is needed and a current scenario is a macro cell, a first AI model of the macro cell corresponding to the AI function for spatial domain beam prediction is activated. Further, the network device may send corresponding indication information to the terminal, causing the terminal to activate the first AI model of the macro cell corresponding to the AI function for spatial domain beam prediction in the case of the macro cell scenario.

For example, if changing the spatial domain beam prediction is needed and the scenario is a micro cell scenario, the first AI model of the macro cell corresponding to the AI function for spatial domain beam prediction is deactivated, and a second AI model of the micro cell corresponding to the AI function for spatial domain beam prediction is activated. For example, the network device may send corresponding indication information to the terminal, causing the terminal to activate the second AI model of the micro cell corresponding to the AI function for spatial domain beam prediction in the case of the micro cell scenario.

The communication method provided in an embodiment defines the specific content of AI model management from both the function level and the model level, which makes a subsequent communication method clearer.

In embodiments of the present disclosure, the terminal receives the information sent by the network device, which includes parameter information. Different functions and/or different models correspond to different pieces of parameter information.

For example, parameter information corresponding to a model with the spatial domain beam prediction function (herein briefly referred to as first parameter information for ease of understanding) indicates parameters, assumptions, and/or scenarios applicable to the spatial domain beam prediction function. That is, the first parameter information indicating the spatial domain beam prediction function may include the parameters, the assumptions, and/or the scenarios. The parameter information corresponding to a model with the time domain beam prediction function (herein briefly referred to as second parameter information for ease of understanding) indicates parameters, assumptions, and/or scenarios applicable to the time domain beam prediction function. That is, the second parameter information indicating the time domain beam prediction function may include the parameters, the assumptions, and/or the scenarios.

It may be understood that the second parameter information corresponding to the time domain beam prediction function is not entirely identical with the first parameter information corresponding to the spatial domain beam prediction function.

In the embodiments of the present disclosure, at least one piece of following information included in the different pieces of parameter information is different: network device coverage parameter information; terminal distribution information; beam information; or cell identifier information.

Different AI functions correspond to the different pieces of parameter information. The parameter information corresponding to different AI functions is independent of each other and not entirely identical. it is assumed that any two AI functions among the different AI functions are called a first AI function and a second AI function. The different models of the same AI function correspond to the different pieces of parameter information. Any two of different models are called a first model and a second model. It may be understood that in following embodiments of the present disclosure, the first AI function and the first model may be used interchangeably, and the second AI function and the second model may be used interchangeably. It may also be understood that the first function and the second function involved in the following embodiments of the present disclosure may be replaced with the first model and the second model, respectively. The first model and the second model may be replaced with the first function and the second function.

In embodiments of the present disclosure, the first AI function and the second AI function differ in at least one of: the network device coverage parameter information; the terminal distribution information; the beam information; or the cell identifier information. For example, a network deployment type corresponding to the first AI function is different from a network deployment type corresponding to the second AI function; for example, an inter-site distance (ISD) between network devices corresponding to the first AI function is different from an ISD between network devices corresponding to the second AI function; for example, a terminal distribution corresponding to the first AI function is different from a terminal distribution corresponding to the second AI function; for example, beam information corresponding to the first AI function is different from beam information corresponding to the second AI function.

In embodiments of the present disclosure, a parameter item included in the first AI function is different from a parameter item included in the second AI function.

For example, parameter information corresponding to the first AI function includes the network device coverage parameter information and the cell identifier information, and parameter information corresponding to the second AI function may include the network device coverage parameter information and the terminal distribution information.

In embodiments of the present disclosure, a network device coverage parameter includes at least one of: a deployment type of the network device or an ISD between network devices.

The deployment type of the network device includes at least one of: an urban macro (Uma) cell, an urban micro (Umi) cell, an indoor hotspot, a dense urban, or a rural area.

The network deployment type corresponding to the first AI function is different from the network deployment type corresponding to the second AI function.

For example, the first AI function corresponds to a macro cell, and the second AI function corresponds to a micro cell. Then, in a macro cell scenario, the terminal activates the first AI function; and in a micro cell scenario, the terminal activates the second AI function.

It should be understood that the macro cell is also called a macrocell, meaning that a cell that uses cellular technology is called the macro cell or the macrocell. The urban macro cell is a macro cell set in an urban area.

It should be understood that the micro cell is a technology developed on a basis of the macro cell with a goal to eliminate a "blind spot" in the macro cell. The urban micro cell is a micro cell set in an urban area.

For example, when the deployment type of the network device serves as the parameter information, it may involve only one item, or there may be a possibility of mutual combination. For example, the parameter information includes deployment of the device A in the urban macro cell and deployment of the device A in the rural area.

In embodiments of the present disclosure, a distance between network devices is also called an ISD between base stations.

In embodiments of the present disclosure, a specific numerical setting of the ISD between the network devices should be determined in combination with the deployment type selected by a corresponding network device. Taking selection of the urban macro cell as an example, the ISD between the network devices may be arranged as 100m, 200m, 500m, 1000m, etc.

The ISD corresponding to the first AI function is different from the ISD corresponding to the second AI function.

For example, an ISD value corresponding to the first AI function is 200m, and an ISD value corresponding to the second AI function is 500m. Then, in a scenario with the ISD value being 200m, the terminal activates the first AI function; and in a scenario with the ISD value being 500m, the terminal activates the second AI function.

In embodiments of the present disclosure, the network device coverage parameter information may include the network device deployment type and the ISD between the network devices. For example, the network device is deployed based on an urban macro cell mode, with an ISD value being 500m.

In embodiments of the present disclosure, the cell identifier information in the network device coverage parameter information includes at least one of a serving cell identifier or a neighboring cell identifier. The cell identifier information is an identifier used to characterize identity of a cell, which may be defined as cell A, cell B, cell C, etc., for example.

For example, taking the serving cell being the cell A as an example, it is known that cells adjacent to the cell A are cell B, cell C, and cell D. Then the network device coverage parameter information needs to include at least one of the cell A, the cell B, the cell C, or the cell D.

The communication method provided in an embodiment makes a subsequent communication method clearer by defining the deployment type corresponding to the network device and the ISD information between the network devices.

In an embodiment of the present disclosure, the terminal distribution information includes a number of outdoor terminals.

In an embodiment of the present disclosure, the terminal distribution information includes a number of indoor terminals.

In an embodiment of the present disclosure, the terminal distribution information includes a ratio of the number of the outdoor terminals to the number of the indoor terminals.

The terminal distribution information may be the ratio of the number of the indoor terminals to the number of the outdoor terminals. For example, the number of the indoor terminals, the number of the outdoor terminals and corresponding ratio information may be obtained by a related device based on statistics of a number of terminals connected to a network within a target range. For example, the statistics show 100 indoor terminals and 200 outdoor terminals, so the ratio of the outdoor terminals to the indoor terminals is 2:1. For example, all terminals distributed in a current area are outdoor terminals, or the ratio of the number of the outdoor terminals to the number of the indoor terminals in the current area is 4:1, etc.

The communication method provided in an embodiment makes a subsequent communication method clearer by defining the terminal distribution information.

In embodiments of the present disclosure, the beam information includes beam information between a first set and a second set.

For example, in embodiments of the present disclosure, the first set is a beam set corresponding to an input value of the AI model, and the second set is a beam set corresponding to a model output.

In embodiments of the present disclosure, the beam information includes a beam type, and the beam type includes a discrete Fourier transform (DFT) beam or a non-DFT beam.

The beam type corresponding to the first AI function is different from the beam type corresponding to the second AI function.

For example, the first AI function corresponds to the DFT beam, and the second AI function corresponds to the non-DFT beam. Then, in a DFT beam scenario, the terminal activates the first AI function; and in a non-DFT beam scenario, the terminal activates the second AI function.

It should be understood that the beam type defines that applicable types of the beam include all types of beams (i.e., a DFT beam or a non-DFT beam). Then, beam information of the first set, beam information of the second set, and beam information between the first set and the second set are also applicable to all the types of beams. The beam information of the first set, the beam information of the second set, and the beam information between the first set and the second set will not be repeated in the following description.

In embodiments of the present disclosure, the beam information between the first set and the second set includes a beam type, and the beam type includes a DFT beam and a non-DFT beam.

In embodiments of the present disclosure, the beam information of the first set includes a beam type, and the beam type includes a DFT beam and a non-DFT beam.

In embodiments of the present disclosure, the beam information of the second set includes a beam type, and the beam type includes a DFT beam and a non-DFT beam.

In embodiments of the present disclosure, the first set includes a beam sent by the network device and/or a beam received by the terminal.

In embodiments of the present disclosure, the second set includes a beam sent by the network device and/or a beam received by the terminal.

In embodiments of the present disclosure, the beam information between the first set and the second set includes at least one of: a number of beams corresponding to the first set; a number of beams corresponding to the second set; or a ratio of the number of beams corresponding to the first set to the number of beams corresponding to the second set.

For example, an input set of a beam prediction model (that is, the number of beams corresponding to the first set) includes: a number of beams sent by the network device and/or a number of beams received by the terminal.

In embodiments of the present disclosure, different AI functions/models correspond to different numbers of beams. Any two of different numbers of beams are called a first number of beams and a second number of beams.

In embodiments of the present disclosure, different AI functions/models correspond to second sets with different numbers of beams. For example, the first model corresponds to a first set with the first number of beams, and the second model corresponds to a first set with the second number of beams. Then, in a scenario of the first number of beams corresponding to the first set, the terminal activates the first AI model; and in a scenario of the second number of beams corresponding to the first set, the terminal activates the second AI function.

For example, an output set of the beam prediction model (that is, the number of beams corresponding to the second set) includes: a number of beams sent by the network device and/or a number of beams received by the terminal. For example, the number of beams is 32.

In embodiments of the present disclosure, different AI functions/models correspond to second sets with different numbers of beams. For example, the first model corresponds to a second set with a first number of beams, and a second model corresponds to a second set with a second number of beams. Then, in a scenario of the first number of beams corresponding to the second set, the terminal activates the first AI model; and in a scenario of the second number of beams corresponding to the second set, the terminal activates the second AI function.

For example, the ratio of the number of beams corresponding to the first set to the number of beams corresponding to the second set includes a ratio of a number of beams sent by the network device and/or received by the terminal in the first set to a number of beams sent by the network device and/or received by the terminal in the second set. If the number of beams in the first set is 8 and the number of beams in the second set is 32, the ratio of the number of beams corresponding to the first set to the number of beams corresponding to the second set is 1/4.

In embodiments of the present disclosure, different ratios of the number of beams corresponding to the first set to the number of beams corresponding to the second set correspond to different AI functions/models. For example, the first model corresponds to a first ratio, and the second model corresponds to a second ratio. Then, in a scenario of the first ratio, the terminal activates the first AI model; and in a scenario of the second ratio, the terminal activates the second AI function.

In embodiments of the present disclosure, the beam information between the first set and the second set may include the number of beams corresponding to the first set and the number of beams corresponding to the second set. Or, the beam information may include the number of beams corresponding to the first set and the ratio of the number of beams corresponding to the first set to the number of beams corresponding to the second set. Or, the beam information may include the number of beams corresponding to the second set and the ratio of the number of beams corresponding to the first set to the number of beams corresponding to the second set.

Different beam information corresponds to different AI functions. For example, first beam information includes the number of beams corresponding to the first set and the number of beams corresponding to the second set, and second beam information includes the number of beams corresponding to the second set and the ratio of the number of beams corresponding to the first set to the number of beams corresponding to the second set. The first beam information corresponds to the first AI function, and the second beam information corresponds to the second AI function.

In embodiments of the present disclosure, when the first set is a subset of the second set, the beam information between the first set and the second set includes location information.

In embodiments of the present disclosure, when the first set is a subset of the second set, the location information between the first set and the second set is locations of beams included in the first set among beams included in the second set.

For example, the second set includes 32 beams, for example, numbered 1, 2, 3, ..., 32. The first set includes beams from the second set numbered 1, 5, 9, 13, ..., 29. That is, the locations of the beams included in the first set among the beams included in the second set are 1st location, 5th location, 9th location, 13th location, ..., 29th location. Or the first set includes beams from the second set numbered 2, 6, 10, 14, ..., 30. That is, the locations of the beams included in the first set among the beams included in the second set are 2nd location, 6th location, 10th location, 4th location, ..., 30th location. It may be understood that when the locations of the beams included in the first set among the beams included in the second set are different, they may correspond to different AI functions; or when the locations of the beams included in the first set among the beams included in the second set are different, they may correspond to the same AI function. The beams include a Tx beam of the network device and/or a reception beam of the terminal.

In embodiments of the present disclosure, different pieces of location information correspond to different AI functions/models. For example, the first model corresponds to a first location, and the second model corresponds to a second location. For example, first location information is that a location of a beam included in the first set among the beams included in the second set is the 1st location, and a location of a beam included in the first set among the beams included in the second set is the 5th location. Then, when the location of the beam included in the first set among the beams included in the second set is the 1st location, the terminal activates the first AI model. When the location of the beam included in the first set among the beams included in the second set is the 5th location, the terminal activates the second AI function.

In the communication method provided in an embodiment, in a model usage scenario of predicting a full set of beams (output set) based on a subset of beams (input set), beam information between the subset and the full set is defined, which makes a function implementation process of the model for predicting beam information of the full set based on beam information of the subset clearer.

In embodiments of the present disclosure, the first set is different from the second set, the beam information between the first set and the second set includes a beam mapping relationship, and the beam mapping relationship is a mapping relationship between a beam included in the first set and a beam included in the second set.

In embodiments of the present disclosure, when the first set is different from the second set, the beam information between the first set and the second set includes the beam mapping relationship, in which the beam mapping relationship is the mapping relationship between the beam included in the first set and the beam included in the second set.

It should be understood that the first set is different from the second set. Since the first set is an input set of the model and the second set is an output set of the model, there is a mapping relationship between the first set and the second set. Therefore, when the first set is different from the second set, corresponding beam information needs to clarify the mapping relationship between the first set and the second set, that is, the mapping relationship between the beam included in the first set and the beam included in the second set needs to be clarified.

For example, the first set is different from the second set, including that all elements in the first set are different from elements in the second set and that some elements in the first set are different from the elements in the second set.

For example, assuming that the first set includes 8 reference signals (i.e., wide beam) covering a 120-degree direction, in which each reference signal corresponds to one beam direction; and the second set includes 32 reference signals (i.e., narrow beam), also covering a 120-degree direction, in which each reference signal also corresponds to one beam direction.

For example, the first set may include the wide beam, and the second set includes the narrow beam. The mapping relationship between the beam included in the first set and the beam included in the second set may be a mapping relationship between the wide beam and the narrow beam. For example, the first set is different from the second set, for example, the first set includes wide beams numbered 1 to 8, and the second set includes narrow beams numbered 1 to 32. One mapping relationship is that the first wide beam corresponds to narrow beams numbered 1 to 4, and so on; or the first wide beam corresponds to narrow beams numbered 2 to 5, and so on.

It may be understood that different mapping relationships between the beam included in the first set and the beam included in the second set correspond to different AI functions, or different mapping relationships between the beam included in the first set and the beam included in the second set correspond to the same AI function.

In embodiments of the present disclosure, different mapping relationships correspond to different AI functions/models. For example, the first model corresponds to a first mapping relationship, and the second model corresponds to a second mapping relationship. The first mapping relationship and the second mapping relationship are different mapping relationships between the beam included in the first set and the beam included in the second set. Then, in a scenario of the first mapping relationship, the terminal activates the first AI model; and in a scenario of the second mapping relationship, the terminal activates the second AI function.

In the communication method provided by embodiments of the present disclosure, in a model usage scenario where the input set is different from the output set, beam information on a mapping relationship between the input set and the output set is defined, which makes model management in a scenario where the input set is different from the output set clearer.

In embodiments of the present disclosure, the information is carried in at least one of: system information, a radio resource control (RRC) signaling, or an RRC release message.

In embodiments of the present disclosure, the RRC signaling includes RRC reconfiguration information.

In embodiments of the present disclosure, the RRC reconfiguration information includes information of a target cell.

It should be understood that the target cell is a cell to which the terminal is to hand over and access.

For example, the information of the target cell includes at least one of: network device coverage parameter information of the target cell; terminal distribution information of the target cell; beam information of the target cell; or cell identifier information of the target cell.

In embodiments of the present disclosure, the network device to which the target cell belongs sends the information of the target cell to the network device to which the serving cell belongs.

In embodiments of the present disclosure, the RRC release message is used for a parameter configuration when the terminal switches from an RRC connected state to an RRC inactive state or an RRC idle state; and the AI model is managed by the terminal in the RRC inactive state or the RRC idle state based on the information.

It should be understood that the information sent via a carrier (i.e., the RRC) indicates that the terminal receives the information sent by the network device.

The communication method provided by embodiments of the present disclosure defines a field of information transmission, which makes a process that the terminal receives the information from the network device clearer.

Based on the same concept, as shown in FIG. 3, which is a flowchart of a communication method according to an exemplary embodiment, embodiments of the present disclosure also provide a communication method, performed by a network device. The method includes following steps at S21.

At S21, information is sent to a terminal, in which the information is used by the terminal to manage an AI model.

In embodiments of the present disclosure, the AI model managed by the terminal is used for beam prediction.

In embodiments of the present disclosure, for an AI model deployed on the terminal, management is performed based on the information sent by the network device. There may be a plurality of implementations for a type of information and specific information content, for example, the type of information may be system information, etc., and the specific information content may be corresponding parameter information, etc.

In embodiments of the present disclosure, the information sent by the network device is the same as or similar to the information received by the terminal described above. Therefore, for the information sent by the network device, the parameter information, and the relationship between the AI function and the parameter information, reference may be made to relevant descriptions in the above embodiments, which will not be repeated here in the embodiments of the present disclosure.

For example, in an implementation, managing the AI model includes: performing an operation on at least one AI function indicated in the information or on at least one model of the same AI function.

In an implementation, the information includes parameter information, and different functions and/or different models correspond to different pieces of parameter information.

In an implementation, at least one piece of following information included in the different pieces of parameter information is different: network device coverage parameter information; terminal distribution information; beam information; or cell identifier information.

In an implementation, the network device coverage parameter information includes a deployment type, and the deployment type includes at least one of: an urban macro cell, an urban micro cell, an indoor hotspot, a dense urban, or a rural area.

In an implementation, the network device coverage parameter information includes an ISD between network devices.

In an implementation, the terminal distribution information includes at least one piece of following information: a number of outdoor terminals; a number of indoor terminals; or a ratio of the number of the outdoor terminals to the number of the indoor terminals.

In an implementation, the beam information includes beam information between a first set and a second set; and the first set and the second set include a network device Tx beam and/or a terminal Rx beam.

In an implementation, the beam information between the first set and the second set includes at least one of: a number of beams corresponding to the first set; a number of beams corresponding to the second set; or a ratio of the number of beams corresponding to the first set to the number of beams corresponding to the second set.

In an implementation, the first set is a subset of the second set; and the beam information between the first set and the second set includes location information, in which the location information indicates a location of a beam included in the first set within a beam included in the second set.

In an implementation, the first set is different from the second set; and the beam information between the first set and the second set includes a beam mapping relationship, in which the beam mapping relationship is a mapping relationship between a beam included in the first set and a beam included in the second set.

In an implementation, the first set is a beam set corresponding to an input value of the AI model, and the second set is a beam set corresponding to a model output.

In an implementation, the beam information includes a beam type, and the beam type includes a DFT beam or a non-DFT beam.

In an implementation, the cell identifier information includes at least one of a serving cell identifier or a neighboring cell identifier.

In an implementation, the information is carried in at least one of: system information, an RRC signaling, or an RRC release message.

In an implementation, the RRC signaling includes RRC reconfiguration information, the RRC reconfiguration information includes the information of a target cell, and the target cell is a cell to which the terminal is to hand over and access.

In an implementation, the information of the target cell is sent by a network device to which the target cell belongs, to a network device to which a serving cell belongs.

In an implementation, the RRC release message is used for a parameter configuration when the terminal switches from an RRC connected state to an RRC inactive state or an RRC idle state; and the AI model is managed by the terminal in the RRC inactive state or the RRC idle state based on the information.

In an implementation, the AI model is configured to predict a beam.

The communication method provided by embodiments of the present disclosure defines an aspect of information transmission for AI management sent by the network device, which makes a process that the terminal receives the information from the network device clearer.

It needs to be noted that those skilled in the art may understand that various implementations/embodiments in the above embodiments of the present disclosure may be used in conjunction with the above embodiments or may be used independently. Whether the implementations/embodiments are used alone or in conjunction with the above embodiments, implementation principles are similar. In embodiments of the present disclosure, some embodiments are described using an implementation method that is used together. Of course, those skilled in the art may understand that such examples are not limitations to the embodiments of the present disclosure.

Based on the same concept, embodiments of the present disclosure also provide a communication apparatus. The communication apparatus may be a terminal or a component in a terminal.

It may be understood that in order to achieve above functions, a communication apparatus provided by embodiments of the present disclosure includes hardware structures and/or software modules corresponding to execution of each function. In combination with units and algorithm steps of the examples disclosed in embodiments of the present disclosure, embodiments of the present disclosure may be implemented in a form of hardware or a combination of hardware and computer software. Whether a function is executed by hardware or by computer software driving hardware depends on a specific application and a design constraint of the technical solution. Those skilled in the art may use different methods for each specific application to implement described functions, but such implementations should not be considered as going beyond the scope of the technical solution in the embodiments of the present disclosure.

FIG. 4 is a block diagram of a communication apparatus according to an exemplary embodiment. As shown in FIG. 4, the communication apparatus includes a receiving unit 101.

The receiving unit 101 is configured to receive information sent by a network device, in which the information is used by the terminal to manage an AI model.

In an implementation, managing the AI model includes managing at least one AI function and/or at least one model included in the same AI function, in which managing the at least one AI function includes at least one of: activating an AI function, deactivating an AI function, or switching between different AI functions; and managing the at least one model included in the same AI function includes activating a model, deactivating a model, or switching between the at least one model.

In an implementation, different functions and/or different models correspond to different pieces of parameter information.

In an implementation, at least one piece of following information included in the different pieces of parameter information is different: network device coverage parameter information; terminal distribution information; beam information; or cell identifier information.

In an implementation, the network device coverage parameter information includes a deployment type, and the deployment type includes at least one of: an urban macro cell, an urban micro cell, an indoor hotspot, a dense urban, or a rural area.

In an implementation, the network device coverage parameter information includes an ISD between network devices.

In an implementation, the terminal distribution information includes at least one piece of following information: a number of outdoor terminals; a number of indoor terminals; or a ratio of the number of the outdoor terminals to the number of the indoor terminals.

In an implementation, the beam information includes beam information between a first set and a second set; and the first set and the second set include a network device Tx beam and/or a terminal Rx beam.

In an implementation, the beam information between the first set and the second set includes at least one of: a number of beams corresponding to the first set; a number of beams corresponding to the second set; or a ratio of the number of beams corresponding to the first set to the number of beams corresponding to the second set.

In an implementation, the first set is a subset of the second set; and the beam information between the first set and the second set includes location information, in which the location information indicates a location of a beam included in the first set within a beam included in the second set.

In an implementation, the first set is different from the second set; and the beam information between the first set and the second set includes a beam mapping relationship, in which the beam mapping relationship is a mapping relationship between a beam included in the first set and a beam included in the second set.

In an implementation, the first set is a beam set corresponding to an input value of the AI model, and the second set is a beam set corresponding to a model output.

In an implementation, the beam information includes a beam type, and the beam type includes a DFT beam or a non-DFT beam.

In an implementation, the cell identifier information includes at least one of a serving cell identifier or a neighboring cell identifier.

In an implementation, the information is carried in at least one of: system information, an RRC signaling, or an RRC release message.

In an implementation, the RRC signaling includes RRC reconfiguration information, the RRC reconfiguration information includes the information of a target cell, and the target cell is a cell to which the terminal is to hand over and access.

In an implementation, the information of the target cell is sent by a network device to which the target cell belongs, to a network device to which a serving cell belongs.

In an implementation, the RRC release message is used for a parameter configuration when the terminal switches from an RRC connected state to an RRC inactive state or an RRC idle state; and the AI model is managed by the terminal in the RRC inactive state or the RRC idle state based on the information.

In an implementation, the AI model is configured to predict a beam.

Based on the same concept, embodiments of the present disclosure also provide a communication apparatus. The communication apparatus may be a network device or a component in a network device.

FIG. 5 is a block diagram of a communication apparatus according to an exemplary embodiment. As shown in FIG. 5, embodiments of the present disclosure provide a communication apparatus, including: a sending unit 201, configured to send information to a terminal, in which the information is used by the terminal to manage an AI model.

In an implementation, managing the AI model includes managing at least one AI function and/or at least one model included in the same AI function, in which managing the at least one AI function includes at least one of: activating an AI function, deactivating an AI function, or switching between different AI functions; and managing the at least one model included in the same AI function includes activating a model, deactivating a model, or switching between the at least one model.

In an implementation, different functions and/or different models correspond to different pieces of parameter information.

In an implementation, at least one piece of following information included in the different pieces of parameter information is different: network device coverage parameter information; terminal distribution information; beam information; or cell identifier information.

In an implementation, the network device coverage parameter information includes a deployment type, and the deployment type includes at least one of: an urban macro cell, an urban micro cell, an indoor hotspot, a dense urban, or a rural area.

In an implementation, the network device coverage parameter information includes an ISD between network devices.

In an implementation, the terminal distribution information includes at least one piece of following information: a number of outdoor terminals; a number of indoor terminals; or a ratio of the number of the outdoor terminals to the number of the indoor terminals.

In an implementation, the beam information includes beam information between a first set and a second set; and the first set and the second set include a network device Tx beam and/or a terminal Rx beam.

In an implementation, the beam information between the first set and the second set includes at least one of: a number of beams corresponding to the first set; a number of beams corresponding to the second set; or a ratio of the number of beams corresponding to the first set to the number of beams corresponding to the second set.

In an implementation, the first set is a subset of the second set; and the beam information between the first set and the second set includes location information, in which the location information indicates a location of a beam included in the first set within a beam included in the second set.

In an implementation, the first set is different from the second set; and the beam information between the first set and the second set includes a beam mapping relationship, in which the beam mapping relationship is a mapping relationship between a beam included in the first set and a beam included in the second set.

In an implementation, the first set is a beam set corresponding to an input value of the AI model, and the second set is a beam set corresponding to a model output.

In an implementation, the beam information includes a beam type, and the beam type includes a DFT beam or a non-DFT beam.

In an implementation, the cell identifier information includes at least one of a serving cell identifier or a neighboring cell identifier.

In an implementation, the information is carried in at least one of: system information, an RRC signaling, or an RRC release message.

In an implementation, the RRC signaling includes RRC reconfiguration information, the RRC reconfiguration information includes the information of a target cell, and the target cell is a cell to which the terminal is to hand over and access.

In an implementation, the information of the target cell is sent by a network device to which the target cell belongs, to a network device to which a serving cell belongs.

In an implementation, the RRC release message is used for a parameter configuration when the terminal switches from an RRC connected state to an RRC inactive state or an RRC idle state; and the AI model is managed by the terminal in the RRC inactive state or the RRC idle state based on the information.

In an implementation, the AI model is configured to predict a beam.

Based on the same concept, embodiments of the present disclosure also provide a communication system. The communication system includes a terminal and a network device. The terminal includes, for example, at least one of a mobile phone, a wearable device, an Internet of Things device, a car with a communication function, a smart car, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in a smart grid, a wireless terminal in transportation safety, a wireless terminal in a smart city, or a wireless terminal in a smart home, which is not limited herein.

The access network device is, for example, a node or a device that connects a terminal to a wireless network. The access network device may include at least one of an evolved NodeB (eNB) in a 5G communication system, a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an Open RAN, a Cloud RAN, a base station in other communication systems, or an access node in a wireless fidelity (WiFi) system, but is not limited herein.

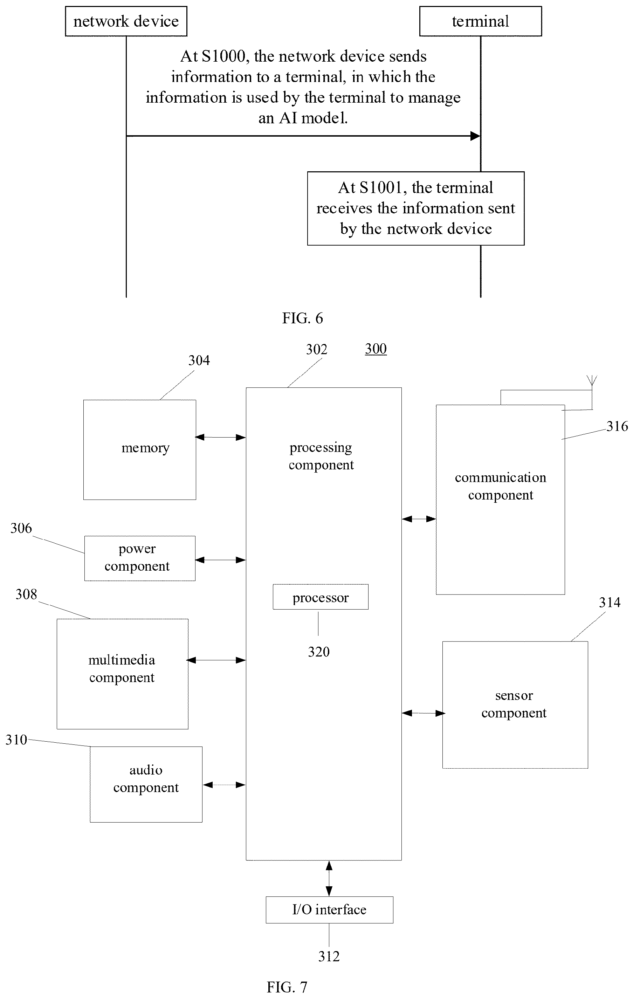

FIG. 6 is a schematic diagram of an architecture of a communication system according to an exemplary embodiment. As shown in FIG. 6, embodiments of the present disclosure relate to a communication method. The method includes steps at S1000 to S1001.

At S1000, the network device sends information to a terminal, in which the information is used by the terminal to manage an AI model.

In an implementation, managing the AI model includes managing at least one AI function and/or at least one model included in the same AI function, in which managing the at least one AI function includes at least one of: activating an AI function, deactivating an AI function, or switching between different AI functions; and managing the at least one model included in the same AI function includes activating a model, deactivating a model, or switching between the at least one model.

In an implementation, the information includes parameter information, and different functions and/or different models correspond to different pieces of parameter information.

In an implementation, at least one piece of following information included in the different pieces of parameter information is different: network device coverage parameter information; terminal distribution information; beam information; or cell identifier information.

In an implementation, the network device coverage parameter information includes a deployment type, and the deployment type includes at least one of: an urban macro cell, an urban micro cell, an indoor hotspot, a dense urban, or a rural area.

In an implementation, the network device coverage parameter information includes an ISD between network devices.

In an implementation, the terminal distribution information includes at least one piece of following information: a number of outdoor terminals; a number of indoor terminals; or a ratio of the number of the outdoor terminals to the number of the indoor terminals.

In an implementation, the beam information includes beam information between a first set and a second set; and the first set and the second set include a network device Tx beam and/or a terminal Rx beam.

In an implementation, the beam information between the first set and the second set includes at least one of: a number of beams corresponding to the first set; a number of beams corresponding to the second set; or a ratio of the number of beams corresponding to the first set to the number of beams corresponding to the second set.

In an implementation, the first set is a subset of the second set; and the beam information between the first set and the second set includes location information, in which the location information indicates a location of a beam included in the first set within a beam included in the second set.

In an implementation, the first set is different from the second set; and the beam information between the first set and the second set includes a beam mapping relationship, in which the beam mapping relationship is a mapping relationship between a beam included in the first set and a beam included in the second set.

In an implementation, the first set is a beam set corresponding to an input value of the AI model, and the second set is a beam set corresponding to a model output.

In an implementation, the beam information includes a beam type, and the beam type includes a DFT beam or a non-DFT beam.

In an implementation, the cell identifier information includes at least one of a serving cell identifier or a neighboring cell identifier.

In an implementation, the information is carried in at least one of: system information, an RRC signaling, or an RRC release message.

In an implementation, the RRC signaling includes RRC reconfiguration information, the RRC reconfiguration information includes the information of a target cell, and the target cell is a cell to which the terminal is to hand over and access.

In an implementation, the information of the target cell is sent by a network device to which the target cell belongs, to a network device to which a serving cell belongs.

In an implementation, the RRC release message is used for a parameter configuration when the terminal switches from an RRC connected state to an RRC inactive state or an RRC idle state; and the AI model is managed by the terminal in the RRC inactive state or the RRC idle state based on the information.

In an implementation, the AI model is configured to predict a beam.

At S1001, the terminal receives the information sent by the network device, in which the information is used by the terminal to manage the AI model.

In an implementation, managing the AI model includes managing at least one AI function and/or at least one model included in the same AI function, in which managing the at least one AI function includes at least one of: activating an AI function, deactivating an AI function, or switching between different AI functions; and managing the at least one model included in the same AI function includes activating a model, deactivating a model, or switching between different models.

In an implementation, the information includes parameter information, and different functions and/or different models correspond to different pieces of parameter information.

In an implementation, at least one piece of following information included in the different pieces of parameter information is different: network device coverage parameter information; terminal distribution information; beam information; or cell identifier information.

In an implementation, the network device coverage parameter information includes a deployment type, and the deployment type includes at least one of: an urban macro cell, an urban micro cell, an indoor hotspot, a dense urban, or a rural area.

In an implementation, the network device coverage parameter information includes an ISD between network devices.

In an implementation, the terminal distribution information includes a ratio of the number of the outdoor terminals to the number of the indoor terminals.

In an implementation, the beam information includes beam information between a first set and a second set; and the first set and the second set include a network device Tx beam and/or a terminal Rx beam.

In an implementation, the beam information between the first set and the second set includes at least one of: a number of beams corresponding to the first set; a number of beams corresponding to the second set; or a ratio of the number of beams corresponding to the first set to the number of beams corresponding to the second set.

In an implementation, the first set is a subset of the second set; and the beam information between the first set and the second set includes location information, in which the location information indicates a location of a beam included in the first set within a beam included in the second set.

In an implementation, the first set is different from the second set; and the beam information between the first set and the second set includes a beam mapping relationship, in which the beam mapping relationship is a mapping relationship between a beam included in the first set and a beam included in the second set.

In an implementation, the first set is a beam set corresponding to an input value of the AI model, and the second set is a beam set corresponding to a model output.

In an implementation, the beam information includes a beam type, and the beam type includes a DFT beam or a non-DFT beam.

In an implementation, the cell identifier information includes at least one of a serving cell identifier or a neighboring cell identifier.

In an implementation, the information is carried in at least one of: system information, an RRC signaling, or an RRC release message.

In an implementation, the RRC signaling includes RRC reconfiguration information, the RRC reconfiguration information includes the information of a target cell, and the target cell is a cell to which the terminal is to hand over and access.

In an implementation, the information of the target cell is sent by a network device to which the target cell belongs, to a network device to which a serving cell belongs.

In an implementation, the RRC release message is used for a parameter configuration when the terminal switches from an RRC connected state to an RRC inactive state or an RRC idle state; and the AI model is managed by the terminal in the RRC inactive state or the RRC idle state based on the information.

In an implementation, the AI model is configured to predict a beam.

FIG. 7 is a block diagram of a device 300 for communication according to an exemplary embodiment. For example, the device 300 may be a mobile phone, a computer, a digital broadcast terminal, a message transmission and reception device, a game console, a tablet device, a medical device, an exercise device, a personal digital assistant, and so on.

Referring to FIG. 7, the device 300 may include one or more of: a processing component 302, a memory 304, a power component 306, a multimedia component 308, an audio component 310, an input/output (I/O) interface 312, a sensor component 314, and a communication component 316.

The processing component 302 normally controls the overall operation (such as operations associated with displaying, telephone calls, data communications, camera operations and recording operations) of the device 300. The processing component 302 may include one or more of processors 320 to execute instructions so as to perform all or part of the steps of the above method. In addition, the processing component 302 may include one or more of units to facilitate interactions between the processing component 302 and other components. For example, the processing component 302 may include a multimedia module to facilitate interactions between the multimedia component 308 and the processing component 302.

The memory 304 is configured to store various types of data to support operations at the device 300. Examples of such data include instructions for any application or method operated on the device 300, contact data, phone book data, messages, images, videos and so on. The memory 304 may be realized by any type of volatile or non-volatile storage devices, or their combination, such as a static random access memory (SRAM), an electrically erasable programmable read only memory (EEPROM), an erasable programmable read only memory (EPROM), a programmable read only memory (PROM), a read only memory (ROM), a magnetic memory, a flash memory, a disk or an optical disk.

The power component 306 provides power to various components of the device 300. The power component 306 may include a power management system, one or more power sources and other components associated with power generation, management, and distribution of the device 300.

The multimedia component 308 includes a screen that provides an output interface between the device 300 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, slides, and gestures on the touch panel. The touch sensor may sense not only the boundary of the touches or sliding actions, but also the duration and pressure related to the touches or sliding operations. In some embodiments, the multimedia component 308 includes a front camera and/or a rear camera. When the device 300 is in an operation mode such as a shooting mode or a video mode, the front camera and/or the rear camera may receive external multimedia data. Each of the front camera or the rear camera may be a fixed optical lens system or have a focal length and an optical zoom capability.

The audio component 310 is configured to output and/or input an audio signal. For example, the audio component 310 includes a microphone (MIC) that is configured to receive an external audio signal when the device 300 is in an operation mode such as a call mode, a recording mode, and a voice recognition mode. The received audio signal may be further stored in the memory 304 or transmitted via the communication component 316. In some embodiments, the audio component 310 also includes a speaker for outputting audio signals.

The I/O interface 312 provides an interface between the processing component 302 and a peripheral interface unit. The peripheral interface unit may be a keyboard, a click wheel, a button and so on. These buttons may include, but are not limited to, a home button, a volume button, a start button, and a locking button.

The sensor component 314 includes one or more sensors for providing the device 300 with various aspects of status assessments. For example, the sensor component 314 may detect an ON/OFF state of the device 300 and relative positioning of the components. For example, the components may be a display and a keypad of the device 300. The sensor component 314 may also detect a change in position of the device 300 or a component of the device 300, presence or absence of contact of the user with the device 300, orientation or acceleration/deceleration of the device 300 and a temperature change of the device 300. The sensor component 314 may include a proximity sensor configured to detect the presence of nearby objects without any physical contact. The sensor component 314 may also include a light sensor (such as a CMOS or a CCD image sensor) for use in imaging applications. In some embodiments, the sensor component 314 may also include an acceleration sensor, a gyro sensor, a magnetic sensor, a pressure sensor, or a temperature sensor.

The communication component 316 is configured to facilitate wired or wireless communication between the device 300 and other devices. The device 300 may access a wireless network based on a communication standard such as WiFi, 2G, 3G, or their combination. In an exemplary embodiment, the communication component 316 receives broadcast signals or broadcast-associated information from an external broadcast management system via a broadcast channel. In an exemplary embodiment, the communication component 316 also includes a near field communication (NFC) module to facilitate short range communication. For example, the NFC module may be implemented based on radio frequency identification (RFID) technology, infrared data association (IrDA) technology, ultra-wide band (UWB) technology, Bluetooth (BT) technology and other technologies.

In an exemplary embodiment, the device 300 may be implemented by one or more application specific integrated circuits (ASICs), digital signal processors (DSPs), digital signal processing devices (DSPDs), programmable logic devices (PLDs), field programmable gate arrays (FPGA), controllers, microcontrollers, microprocessors, or other electronic components, so as to perform the above method.

In one or more exemplary embodiments, a non-transitory computer readable storage medium including instructions is also provided, such as a memory 304 including instructions. When the instructions are executed by the processor 320 in the device 300 to implement the above methods. For example, the non-transitory computer readable storage medium may be a read-only memory (ROM), a random-access memory (RAM), a compact disc read-only memory (CD-ROM), a magnetic tape, a floppy disc, an optical data storage device, and so on.

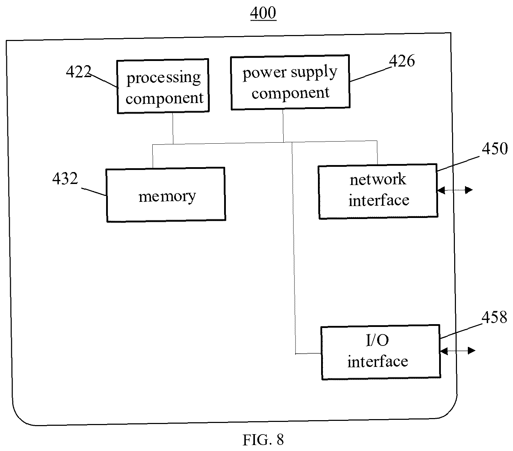

FIG. 8 is a block diagram of a device 400 for communication according to an exemplary embodiment. For example, the device 400 is provided as a network device. Referring to FIG. 8, the device 400 includes a processing component 422 including one or more processors and a memory resource represented by a memory 432. The memory 432 is configured to store instructions executable by the processing component 422, such as an application program. The application program stored in the memory 432 may include one or more modules, in which each corresponds to a set of instructions. In addition, the processing component 422 is configured to execute instructions so as to implement the above method.

The device 400 may also include a power component 426 configured to perform power management of the device 400, a wired or wireless network interface 450 configured to connect the device 400 to a network, and an I/O interface 458. The device 400 may operate an operating system stored in the memory 432, such as Windows ServerTM, Mac OS XTM, UnixTM, LinuxTM, FreeBSDTM or similar operating systems.

Embodiments of the present disclosure also provide a non-transitory computer readable storage medium including instructions, for example, the memory 432 including instructions. The above instructions may be executed by the processing component 422 of the device 400 to implement the above method. For example, the non-temporary computer readable storage medium may be an ROM, an RAM, a CD-ROM, a magnetic tape, a floppy disc, an optical data storage device, and so on.

Furthermore, it may be understood that the term "a plurality of" in the present disclosure refers to two or more than two, and other quantifiers are similar to it. The term "and/or" describes the relationship between associated objects, indicating that there may be three relationships, for example, A and/or B means existing only A, existing A and B at the same time, and existing only B. The character "/" generally indicates that the relationship between associated objects is an "or" relationship. The terms "a/an" and "the" in singular form also include plural forms, unless the context clearly indicates other meanings.

Furthermore, it may be understood that meanings of terms such as "in response to" and "if" in the present disclosure depend on a context and an actual usage scenario. For example, the term "in response to" as used herein may be interpreted as "when", "while" or "in a case that/of".

Furthermore, it may be understood that terms such as "first" and "second" are used to describe various types of information, but the information should not be limited by these terms. The terms are only used to distinguish information of the same type from each other and do not indicate a particular order or a degree of importance. In fact, terms such as "first" and "second" are completely interchangeable. For example, without departing from the scope of the present disclosure, first information may also be referred to as second information, and similarly, second information may also be referred to as first information.

Furthermore, it may be understood that, although operations are described in a particular order in the accompanying drawings, it may not be understood as needing these operations be performed in a particular order or in serial order, or needing all the operations shown to be performed in order to obtain a desirable result. In a given environment, multitasking and parallel processing may be advantageous.

Other embodiments of the present disclosure will be apparent to those skilled in the art from consideration of the specification and practice of the present disclosure disclosed here. This application is intended to cover any variations, uses, or adaptations of the present disclosure following the general principles of the disclosure and including common knowledge or conventional technical means in the art that are not disclosed herein.

It should be appreciated that the present disclosure is not limited to the exaction construction that has been described above and shown in the accompanying drawings, and that various modifications and changes may be made without departing from the scope of the disclosure. It is expected that the scope of the present disclosure is only limited by the appended claims.

## Claims

1. A communication method, performed by a terminal, comprising:
receiving information sent by a network device, wherein the information is used by the terminal to manage an artificial intelligence (AI) model.

2. The method of claim 1, wherein managing the AI model comprises: performing an operation on at least one AI function indicated in the information or on at least one model of the same AI function.

3. The method of claim 1 or 2, wherein the information comprises parameter information, and different functions and/or different models correspond to different pieces of parameter information.

4. The method of claim 3, wherein at least one piece of following information comprised in the different pieces of parameter information is different:
network device coverage parameter information;
terminal distribution information;
beam information; or
cell identifier information.

5. The method of claim 4, wherein the network device coverage parameter information comprises a deployment type, and the deployment type comprises at least one of: an urban macro cell, an urban micro cell, an indoor hotspot, a dense urban, or a rural area.

6. The method of claim 4, wherein the network device coverage parameter information comprises an inter-site distance (ISD) between network devices.

7. The method of claim 4, wherein the terminal distribution information comprises at least one piece of following information:
a number of outdoor terminals;
a number of indoor terminals; or
a ratio of the number of the outdoor terminals to the number of the indoor terminals.

8. The method of claim 4, wherein the beam information comprises beam information between a first set and a second set; and
the first set and the second set comprise a network device transmission beam and/or a terminal reception beam.

9. The method of claim 8, wherein the beam information between the first set and the second set comprises at least one of:
a number of beams corresponding to the first set;
a number of beams corresponding to the second set; or
a ratio of the number of beams corresponding to the first set to the number of beams corresponding to the second set.

10. The method of claim 8, wherein the first set is a subset of the second set; and
the beam information between the first set and the second set comprises location information, wherein the location information indicates a location of a beam included in the first set within a beam included in the second set.

11. The method of claim 8, wherein the first set is different from the second set; and
the beam information between the first set and the second set comprises a beam mapping relationship, wherein the beam mapping relationship is a mapping relationship between a beam included in the first set and a beam included in the second set.

12. The method of any one of claims 8 to 11, wherein the first set is a beam set corresponding to an input value of the AI model, and the second set is a beam set corresponding to a model output.

13. The method of claim 4, wherein the beam information comprises a beam type, and the beam type comprises a discrete Fourier transform (DFT) beam or a non-DFT beam.

14. The method of claim 4, wherein the cell identifier information comprises at least one of a serving cell identifier or a neighboring cell identifier.

15. The method of claim 1, wherein the information is carried in at least one of:
system information, a radio resource control (RRC) signaling, or an RRC release message.

16. The method of claim 15, wherein the RRC signaling comprises RRC reconfiguration information, the RRC reconfiguration information comprises the information of a target cell, and the target cell is a cell to which the terminal is to hand over and access.

17. The method of claim 16, wherein the information of the target cell is sent by a network device to which the target cell belongs, to a network device to which a serving cell belongs.

18. The method of claim 15, wherein the RRC release message is used for a parameter configuration when the terminal switches from an RRC connected state to an RRC inactive state or an RRC idle state; and
the AI model is managed by the terminal in the RRC inactive state or the RRC idle state based on the information.

19. The method of any one of claims 1 to 18, wherein the AI model is configured to predict a beam.

20. A communication method, performed by a network device, comprising:
sending information to a terminal, wherein the information is used by the terminal to manage an artificial intelligence (AI) model.

21. The method of claim 20, wherein managing the AI model comprises: performing an operation on at least one AI function indicated in the information or on at least one model of the same AI function.

22. The method of claim 20 or 21, wherein the information comprises parameter information, and different functions and/or different models correspond to different pieces of parameter information.

23. The method of claim 22, wherein at least one piece of following information comprised in the different pieces of parameter information is different:
network device coverage parameter information;
terminal distribution information;
beam information; or
cell identifier information.

24. The method of claim 23, wherein the network device coverage parameter information comprises a deployment type, and the deployment type comprises at least one of: an urban macro cell, an urban micro cell, an indoor hotspot, a dense urban, or a rural area.

25. The method of claim 23, wherein the network device coverage parameter information comprises an inter-site distance (ISD) between network devices.

26. The method of claim 23, wherein the terminal distribution information comprises at least one piece of following information:
a number of outdoor terminals;
a number of indoor terminals; or
a ratio of the number of the outdoor terminals to the number of the indoor terminals.

27. The method of claim 23, wherein the beam information comprises beam information between a first set and a second set; and
the first set and the second set comprise a network device transmission beam and/or a terminal reception beam.

28. The method of claim 27, wherein the beam information between the first set and the second set comprises at least one of:
a number of beams corresponding to the first set;
a number of beams corresponding to the second set; or
a ratio of the number of beams corresponding to the first set to the number of beams corresponding to the second set.

29. The method of claim 27, wherein the first set is a subset of the second set; and
the beam information between the first set and the second set comprises location information, wherein the location information indicates a location of a beam included in the first set within a beam included in the second set.

30. The method of claim 27, wherein the first set is different from the second set; and
the beam information between the first set and the second set comprises a beam mapping relationship, wherein the beam mapping relationship is a mapping relationship between a beam included in the first set and a beam included in the second set.

31. The method of any one of claims 27 to 30, wherein the first set is a beam set corresponding to an input value of the AI model, and the second set is a beam set corresponding to a model output.

32. The method of claim 23, wherein the beam information comprises a beam type, and the beam type comprises a discrete Fourier transform (DFT) beam or a non-DFT beam.

33. The method of claim 23, wherein the cell identifier information comprises at least one of a serving cell identifier or a neighboring cell identifier.

34. The method of claim 20, wherein the information is carried in at least one of:
system information, a radio resource control (RRC) signaling, or an RRC release message.

35. The method of claim 34, wherein the RRC signaling comprises RRC reconfiguration information, the RRC reconfiguration information comprises the information of a target cell, and the target cell is a cell to which the terminal is to hand over and access.

36. The method of claim 35, wherein the information of the target cell is sent by a network device to which the target cell belongs, to a network device to which a serving cell belongs.

37. The method of claim 34, wherein the RRC release message is used for a parameter configuration when the terminal switches from an RRC connected state to an RRC inactive state or an RRC idle state; and
the AI model is managed by the terminal in the RRC inactive state or the RRC idle state based on the information.

38. The method of any one of claims 20 to 37, wherein the AI model is configured to predict a beam.

39. A communication apparatus, performed by a terminal, comprising:
a receiving unit, configured to receive information sent by a network device, wherein the information is used by the terminal to manage an artificial intelligence (AI) model.

40. A communication apparatus, performed by a network device, comprising:
a sending unit, configured to send information to a terminal, wherein the information is used by the terminal to manage an artificial intelligence (AI) model.

41. A communication device, comprising:
a processor; and
a memory for storing instructions executable by the processor,
wherein the processor is configured to implement the communication method of any one of claims 1 to 19, or implement the communication method of any one of claims 20 to 38.

42. A storage medium for storing instructions that, when executed by a processor of a terminal, the terminal is caused to implement the communication method of any one of claims 1 to 19; or
when executed by a processor of a network device, the network device is caused to implement the communication method of any one of claims 20 to 38.
